# EUROPÄISCHE PATENTSCHRIFT

(11) **EP 0 809 576 B1**
(45) Veröffentlichungstag und Bekanntmachung des Hinweises auf die Patenterteilung: **06.05.1999**
(21) Anmeldenummer: 96904780.2
(22) Anmeldetag: 14.02.1996
(51) Int. Cl.: B60N 2/44

(54) **KLIMASITZ**
TEMPERATURE-CONTROLLED SEAT
SIEGE CLIMATISE

(30) Priorität: 14.02.1995 DE 19504716; 22.12.1995 DE 19548527
(43) Veröffentlichungstag der Anmeldung: 03.12.1997
(73) Patentinhaber: W.E.T. AUTOMOTIVE SYSTEMS AG, 85235 Odelzhausen (DE)
(72) Erfinder: SCHULLER, Ferdinand, D-86343 Königsbrunn (DE); RAUH, Hans-Georg, D-82140 Olching (DE); LORENZEN, Günter, D-82140 Olching (DE); WEISS, Michael, D-83671 Benediktbeuren (DE)
(74) Vertreter: Hano, Christian, Dipl.-Ing.
(86) Internationale Anmeldenummer: EP9600638
(87) Internationale Veröffentlichungsnummer: WO9625301

(56) Entgegenhaltungen:
- WO-A-94/05187
- WO-A-95/14899
- DE-C- 4 112 631
- US-A- 4 572 430

## Beschreibung

Die Erfindung betrifft einen Klimasitz mit wenigstens einer Sitzkontaktfläche, deren Außenseite einem Teil eines Sitzpassagiers zugewandt ist, einer Luftkonditioniereinrichtung, die dem Bereich der Innenseite der Sitzkontaktfläche Luft zuführt, deren Wasserdampfpartialdruck geringer ist als im Mikroklima zwischen Sitzkontaktfläche und Sitzpassagier, einem im Bereich der Innenseite der Sitzkontaktfläche angeordneten elektrischen Heizelement zur Erwärmung der Sitzkontaktfläche, einer Temperaturfühleinrichtung zur Erfassung der Temperatur im Bereich der Sitzkontaktfläche, und einer Regeleinrichtung, die sowohl mit der Luftkonditioniereinrichtung als auch dem elektrischen Heizelement in Verbindung steht und diese entsprechend einem vorgegebenen Temperatursollwert in Abhängigkeit der von der Temperaturfühleinrichtung gemessenen Temperatur regelt.

Ein solcher Klimasitz ist aus der US-A 4 572 430 bekannt.

Der Wärmehaushalt des Menschen ist für dessen Wohlbefinden von entscheidender Bedeutung. Wird dieser Wärmehaushalt durch Kontakt eines größeren Teils der Körperoberfläche mit der Sitzoberfläche eines Kraftfahrzeugsitzes behindert, führt dies zu einem gestörten Wohlbefinden, im Extremfall auch zu gesundheitlichen Schäden.

Zur Lösung dieses Problems bei kalten Umweltbedingungen sind Automobilsitzheizungen bekannt, die den kalten Fahrzeugsitz in kurzer Zeit auf eine für den Sitzpassagier komfortable Temperatur aufheizen.

Aber auch bei heißen Umgebungsbedigungen, wie z.B. im Sommer soll der Wärmehaushalt des Körpers nicht gestört werden.Die vom Körper produzierte und dem Körper von der Umgebung zugeführte Wärme wird zum Teil durch feuchte Wärmeabgabe (Transpiration) und zum Teil durch trockene Wärmeabgabe (Konvektion) wieder abgeführt. Diese Wärmeabfuhr wird jedoch durch die Verdämmung des Körpers an den Sitzkontaktflächen verhindert.

Aus diesem Grund kommt es bei heißen Umgebungsbedingungen nach einer längeren Fahrt in einem Auto auch auf dem besten Fahrzeugsitz zur Schweißbildung. Diese Schweißbildung macht sich beim Aussteigen aus dem Fahrzeug unangenehm bemerkbar, da die Kleidung stellenweise durchfeuchtet ist. Um eine solche Durchfeuchtung der Kleidung zu vermeiden, wird in der DE 41 12 631 C1 ein Fahrzeugsitz vorgeschlagen, der in der Lehne einen an die Innenseite der Sitzkontaktfläche der Lehne angrenzenden Kanal aufweist, der von Luft durchströmt wird. In dem Kanal ist eine Lufttrocknungseinrichtung angeordnet, die die durch den Kanal strömende Luft unter den Taupunkt abkühlt, so daß in der Luft enthaltenes Wasser kondensiert, das dann aus dem Kanal abgeführt wird. Die Sitzkontaktfläche ist gegen Wasserdampf durchlässig und für die den Kanal durchströmende Luft weitgehend undurchlässig.

Die durch die Lufttrocknungseinrichtung entwässerte Luft wird anschließend wieder erwärmt, so daß die relative Feuchte dieser Luft absinkt. Daher ist der Wasserdampfpartialdruck sehr gering, und die Luft kann durch die Sitzkontaktfläche durchtretenden Wasserdampf aufnehmen, bis der Sättigungsdruck erreicht ist. Auf diese Weise kann durch die Sitzkontaktfläche hindurchtretender Wasserdampf abtransportiert und die Sitzkontaktfläche trocken gehalten werden.

Die Lufttrocknungseinrichtung dient bei dem bekannten Fahrzeugsitz allein zur Abfuhr von Feuchtigkeit an der Außenseite der Sitzkontaktfläche. Eine Temperaturregelung mittels der Lufttrocknungseinrichtung ist nicht vorgesehen.

Der Erfindung liegt die Aufgabe zugrunde, mit konstruktiv einfachen Mitteln einen Klimasitz zu schaffen, bei dem die Temperatur der Sitzkontaktfläche unabhängig von den Umgebungsbedingungen auf einfache Weise einstellbar ist, wobei gleichzeitig gleichmäßige Temperierung und eine Entfeuchtung der Sitzkontaktfläche gewährleistet ist.

Diese Aufgabe wird erfindungsgemäß durch einen Klimasitz mit den Merkmalen des Patentanspruchs 1 gelöst.

Die Temperaturfühleinrichtung kann durch unterschiedliche Plazierung des Fühlers als Trockentemperaturfühler oder als Feuchttemperaturfühler, welcher die Verdunstungskälte miterfaßt, ausgeführt werden.

Da die Regeleinrichtung bei dem erfindungsgemäßen Klimasitz sowohl mit der Luftkonditioniereinrichtung als auch mit dem elektrischen Heizelement in Verbindung steht, ist es möglich, den Klimasitz in kurzer Zeit unabhängig von den Umgebungsbedingungen, d. h., wenn die Sitzkontaktfläche beispielsweise durch die Sonne aufgeheizt ist oder im Winter eine Anfangstemperatur von -20°C hat, in kurzer Zeit auf die Wunschtemperatur zu temperieren und diese Temperatur konstant aufrechtzuerhalten, wobei gleichzeitig eine Entfeuchtung der Sitzkontaktfläche gewährleistet ist. Die Einstellung der Wunschtemperatur kann durch einen einzigen Klimaregler erfolgen.

Es kann eine Luftonditioniereinrichtung verwendet werden, die nur die Temperatur der dem Bereich der Innenseite der Sitzkontaktfläche zugeführten Umgebungsluft regelt, da der Wasserdampfpartialdruck der Umgebungsluft zur Abführung von Feuchtigkeit von der Sitzkontaktfläche in der Regel ausreichend gering ist.

Vorzugsweise ist aber sowohl die Temperatur als auch die Luftfeuchtigkeit der von der Luftkonditioniereinrichtung erzeugten Luft mittels der Regeleinrichtung regelbar. Dies ermöglicht es, einen stark erwärmten Sitz schnell abzukühlen, anschließend die Wunschtemperatur aufrechtzuerhalten und durch den noch geringeren Wasserdampfpartialdruck die Feuchte besser abzuführen.

Bei einer bevorzugten Ausführungsform wird die Regeleinrichtung von einem Mikroprozessor gebildet, in dem Kennlinienfelder zur Regelung der Luftkonditioniereinrichtung und des elektrischen Heizelements in Abhängigkeit der gemessenen Temperatur gespeichert sind. Hierdurch wird automatisch eine richtige Temperierung in Abhängigkeit der Anfangstemperatur ermöglicht.

In den Kennlinienfeldern können auch Materialparameter für den Bereich zwischen Sitzkontaktfläche und Luftkonditioniereinrichtung berücksichtigt werden.

Bei Verwendung einer Luftkonditioniereinrichtung mit Entfeuchtungsfunktion weist diese zweckmäßigerweise ein Peltierelement mit einem ersten Wärmetauscher an der Kühlseite und einem zweiten Wärmetauscher an der Heizseite auf, wobei sich der erste und der zweite Wärmetauscher in einen Luftkanal erstrecken, der in Strömungsrichtung nach dem zweiten Wärmetauscher mit einem Luftzuführungssystem in Verbindung steht, das die den zweiten Wärmetauscher durchströmende Luft dem Bereich der Innenseite der Sitzkontaktfläche zuführt.

Der zweite Wärmetauscher erstreckt sich vorzugsweise in einen Kühlkanal, der von Kühlluft durchströmt werden kann.

Die Temperatur und die Feuchtigkeit der die Luftkonditioniereinrichtung verlassenden Luft können gezielt geregelt werden, wenn im Luftkanal und im Kühlkanal jeweils ein Gebläse angeordnet ist, dessen Drehzahl von der Regeleinrichtung regelbar ist.

Das in dem Luftkanal kondensierte Wasser kann durch einen Docht abgeführt werden, der in dem Luftkanal nach dem ersten Wärmetauscher angeordnet ist und sich zur Heizseite des Peltierelements erstreckt.

Die Regelung der Temperatur des Klimasitzes erfolgt bei einer hohen Anfangstemperatur des Bereichs der Sitzkontaktfläche vorzugsweise so, daß die Luftkonditioniereinrichtung so betrieben wird, daß die von ihr dem Bereich der Sitzkontaktfläche zugeführte Luft die Temperatur der Sitzkontaktfläche schnell und für kurze Zeit auf eine Temperatur abkühlt, die deutlich unterhalb einer vorgegeben Soll-Temperatur liegt, und anschließend die Luftkonditioniereinrichtung so betrieben wird, daß durch die von ihr dem Bereich der Sitzkontaktfläche zugeführte Luft die Soll-Temperatur erreicht und im wesentlichen aufrechterhalten wird.

Bei einer niedrigen Anfangstemperatur des Bereichs der Sitzkontaktfläche wird dagegen das elektrische Heizelement zweckmäßigerweise mit voller Leistung betrieben, bis eine Soll-Temperatur erreicht ist, nach Erreichen der Soll-Temperatur wird zusätzlich die Luftkonditioniereinrichtung betrieben, und die Leistung des elektrischen Heizelements zurückgenommen, wobei die Soll-Temperatur im wesentlichen aufrechterhalten wird. Nach vollkommener Durchheizung der Sitzkontaktfläche und der sie umgebenden Bereiche wird das elektrische Heizelement abgeschaltet und die Luftkonditioniereinrichtung so betrieben, daß durch die von ihr dem Bereich der Sitzkontaktfläche zugeführte konditionierte Luft die Soll-Temperatur im wesentlichen aufrechterhalten wird.

Ausführungsbeispiele der Erfindung werden nachstehend anhand der Zeichnungen näher erläutert. Es zeigen:
- Fig. 1: schematisch den Aufbau einer Klimatisierungsvorrichtung eines Klimasitzes;
- Fig. 2: die Klimatisierung der Sitzfläche eines Klimasitzes durch die mit einer Luftrocknungseinrichtung als Luftkonditioniereinrichtung versehene Klimatisierungsvorrichtung;
- Fig. 3: ein Diagramm, das die Temperaturregelung des Klimasitzes in Abhängigkeit von der Anfangstemperatur zeigt.

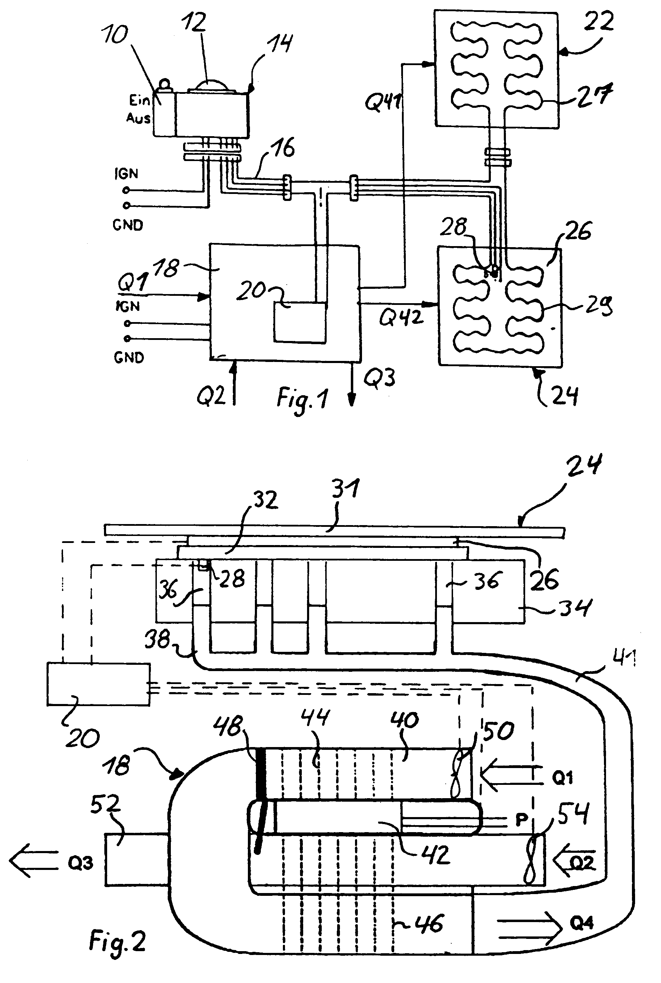

Fig. 1 zeigt schematisch die Lehne 22 und den Sitzteil 24 eines Klimasitzes für ein Fahrzeug. An der Lehne 22 und dem Sitzteil 24 ist auf bekannte Weise ein Flächenheizelement 26 bzw. 27 einer Automobilsitzheizung angeordnet, die jeweils einen linienförmig verlegten Heizleiter 29 aufweisen, der z. B. aus Kupfer besteht. Die Heizleiter 29 sind an eine Stromquelle (nicht gezeigt) angeschlossen, wobei der durch die Heizleiter 29 fließende Strom mittels eines als Regeleinrichtung dienenden Mikroprozessors 20 geregelt wird.

Der Mikroprozessor 20 regelt darüber hinaus die Temperatur und den Feuchtigkeitsgrad von Luftmassenströmen Q41 und Q42, die von einer Luftkonditioniereinrichtung 18 der Sitzkontaktfläche des Sitzteils 24 und der Lehne 22 zugeführt werden.

Mit der Eingabeseite der Regeleinrichtung 20 ist über Leitungen 16 eine Klimaregler 14 verbunden, der einen Ein-/Ausschalter 10 und einen beispielsweise sechsstufigen Sollwertgeber 12 aufweist. Mittels des Sollwertgebers 12 kann der Sitzpassagier die von ihm gewünschte Temperatur (Temperatursollwert) wählen. Der Temperatursollwert wird beispielsweise über einen Widerstandswert eines Potentiometers, eine Widerstandsdecade oder einen anderen variablen Widerstandswert vorgegeben.

Die Ist-Temperatur im Bereich der Sitzkontaktfläche des Sitzteils 24 wird beispielsweise von einem NTC-Temperaturfühler 28 erfaßt und ein entsprechendes Temperatursignal in den Mikroprozessor 20 eingegeben. In dem Mikroprozessor sind Kennlinienfelder abgelegt, mittels derer der Mikroprozessor 20 die Luftkonditioniereinrichtung 18 und die elektrischen Flächenheizelemente 26, 27 in Abhängigkeit von der Anfangstemperatur der Sitzkontaktfläche des Sitzteils 24 und/oder der Lehne 22 regelt.

In den Kennlinienfeldern können gleichzeitig Materialparameter des Klimasitzes, wie z.B. die Luftdurchlässigkeit des Sitzbezuges, die Beschaffenheit des Klimasitzes zwischen der Luftkonditioniereinrichtung 18 und der jeweiligen Sitzkontaktfläche, der Feuchtigkeitstransport in diesen Bereich in Abhängigkeit von den herrschenden Partialdrücken, die thermische Temperaturleitfähigkeit etc. berücksichtigt werden.

Der Aufbau der Klimatisierungsvorrichtung ist in Fig. 2 anhand der Klimatisierung des Sitzteiles 24 eines Klimasitzes näher erläutert. Der Sitzteil 24 des Klimasitzes weist eine für Luft und Wasserdampf durchlässige Sitzkontaktfläche 31 aus Stoff oder perforiertem bzw. porösem Leder auf, an deren untere Innenseite ein für Luft und Wasserdampf durchlässiges flächenförmiges elektrisches Heizelement 26 angrenzt, wie es z.B. in der DE 30 40 888 A1 beschrieben ist. Auf der der Sitzkontaktfläche 31 gegenüberliegenden Seite ist unterhalb des elektrischen Flächenheizelementes 26 eine für Luft und Wasserdampf durchlässige Zwischenschicht 32 aus Polstermaterial, das auch im komprimierten Zustand Mindestanforderungen hinsichtlich Luft- und Wasserdampfdurchlässigkeit erfüllt, angeordnet, die auf einer Schaumstoffpolsterung 34 aufliegt.

In der Schaumstoffpolsterung 34 sind mehrere vertikal hindurchgehende Zufuhrkanäle 36 vorgesehen, die sich von der Unterseite bis zur Oberseite der Schaumstoffpolsterung 34 unterhalb der Zwischenschicht 32 erstrecken. Im oberen Bereich des in Fig. 2 linken Zufuhrkanals 36 ist ein Temperaturfühler 28 an der Unterseite der Zwischenschicht 32 angeordnet.

In die Zufuhrkanäle 36 ist jeweils eine Zweigleitung 38 eingeführt, die mit einer Hauptleitung 41 der Luftkonditioniereinrichtung 18 verbunden ist, die an die Ausströmseite eines Luftkanals 40 anschließt.Die Zufuhrkanäle 36, die Zweigleitungen 38 und die Hauptleitung 41 bilden ein Luftzuführungssystem. Der Luftkanal 40 ist in Längsrichtung U-förmig ausgebildet. An der mit der Umgebungsluft in Verbindung stehenden Lufteintrittsseite des Luftkanals 40 ist ein Ventilatorgebläse 50 angeordnet, mit dessen Hilfe Umgebungsluft in den Luftkanal 40 eingeblasen wird und den Luftkanal 40 durchströmt.

Angrenzend an den eintrittsseitigen Schenkel des Luftkanals 40 ist zwischen den beiden Schenkein des Luftkanals 40 ein Peltierelement 42 angeordnet, dessen Kühlseite dem eintrittsseitigen Schenkel und dessen Heizseite dem austrittsseitigen Schenkel des Luftkanals 40 zugewandt ist. An der Kühlseite des Peltierelements 42 ist ein Wärmetauscher 44 vorgesehen, der sich durch den eintrittsseitigen Schenkel des Luftkanals 40 erstreckt.

Die Wärmetauscher sind als Lamellenwärmetauscher ausgeführt, die hinsichtlich Baugröße, Strömungswiderstand und Wärmeübergang optimiert sind.

Stromaufwärts des ersten Wärmetauschers 44 ist in dem eintrittsseitigen Schenkel des Luftkanals 40 ein Docht 48 vorgesehen, der mit der Heizseite des Peltierelements 42 in Verbindung steht.

An der Heizseite des Peltierelements 42 ist ein zweiter Wärmetauscher 46 vorgesehen, der sich angrenzend an die Kühlseite des Peltierelements 42 durch einen Parallel zu den Schenkeln verlaufenden Kühlkanal 52 und anschließend in den austrittsseitigen Schenkel des Luftkanals 40 erstreckt. An der Eintrittsseite des Kühlkanals 52 ist ein Venilatoraebläse 54 vorgesehen, mit dessen Hilfe ein Luftstrom Q2 aus der Umgebung in den Kühlkanal 52 angesaugt werden kann.

Aufgrund der oben erwähnten Ausgestaltung der Luftkonditioniereinrichtung wird ein durch das Gebläse 50 in den Luftkanal 40 angesaugter Luftmassenstrom Q1 durch den an der Kühlseite des Peltierelements 42 angeordneten ersten Wärmetauscher 44 unter den Taupunkt abgekühlt, so daß in der Luft enthaltenes Wasser kondensiert und abgeschieden wird. Dieses Wasser wird über den Docht 48 zur Heizseite des Peltierelements 42 abgeführt, wo es in die Umgebungsluft verdunstet wird.

Die entfeuchtete Luft durchströmt anschließend den zweiten Wärmetauscher 46 durch den sie erwärmt wird, wodurch die relative Feuchte der Luft weiter abgesenkt wird. Die auf diese Weise konditionierte Luft wird anschließend über die Hauptleitung 41 und die Zweigleitungen 38 in die Zufuhrkanäle 38 geblasen.

Die Sitzmaterialien und die Luftführung sind so gewählt, daß die konditionierte Luft mit den oberen Sitzaufbauten sowie mit der Luft zwischen Sitz und Sitzpassagier in Wechselwirkung tritt und über das Wasserpartialdruckgefälle eine Trocknung erfolgt. Nach erfolgter Wechselwirkung strömt ein Teil der Luft durch den Schaumstoff 34 in die Umgebungsluft zurück, während der andere Teil am Sitzpassagier vorbeiweicht.

Bei vorgegebener Leistung P für das Peltierelement 42 kann die Abkühlung des Luftstromes Q1 über die Drehzahl des Gebläses 50 geregelt werden. Durch entsprechende Wahl der Drehzahl des Gebläses 54 läßt sich die Temperatur des den Luftkanal 40 verlassenden Luftmassenstromes Q4 gezielt abkühlen, da die durch das Gebläse 54 in den Kühlkanal 52 angesaugte Umgebungsluft den zweiten Wärmetauscher 46 durchströmt und somit dessen Temperatur verringert. Die den Kühlkananl 52 durchströmende Luft wird als Luftmassenstrom Q3 an die Umgebung abgegeben. Die Temperatur des Luftmassenstroms Q4 ist somit direkt abhängig von der Drehzahl des Gebläses 52.

Das elektrische Heizelement 26, die Gebläse 50 und 54 und das Peltierelement 42 stehen mit dem Mikroprozessor 20 in Verbindung und werden von diesem abhängig von der durch den mit der Eingangsseite des Mikroprozessors in Verbindung stehenden Temperaturfühler 28 gemessenen Ist-Temperatur und der vorgegebenen Soll-Teperatur geregelt.

Wenn die Klimatisierungsvorrichtung von dem Sitzpassagier durch Einschalten des Ein-/Ausschalters 10 in Betrieb genommen wird und die entsprechende Wunschtemperatur an dem Klimaregler eingestellt worden ist, wird von dem Temperaturfühler 28 ein der Anfangstemperatur im Bereich der Sitzkontaktfläche 31 entsprechendes Temperatursignal an den Mikroprozessor 20 gegeben.

Abhängig von der Anfangstemperatur und der vorgegebenen Soll-Temperatur bestimmt die Regeleinrichtung 20 anhand der abgelegten Kennlinienfelder die Regelstrecke des elektrischen Heizelements 26, der Gebläse 50, 54 und des Peltierelementes 42.

Wenn die durch den Temperaturfühler 28 gemessene Anfangstemperatur sehr kalt ist, z.B. -20°C im Winter, erfolgt die Regelung so, daß der Mikroprozessor 20 das elektrische Heizelement 26 aktiviert und den Sitz mit voller Leistung auf die am Sollwertgeber gewählte Wunschtemperatur Tₛₑₜ aufheizt. Nach Erreichen der Wunschtemperatur Tₛₑₜ wird die Luftkonditioniereinrichtung 18 hinzugeschaltet und die Leistung des elektrischen Heizelements 26 zurückgenommen. Sowohl das elektrische Heizelement 26 als auch die Luftkonditioniereinrichtung 18 sorgen nun für eine gleichmäßige Temperierung des Sitzes. Die Luftkonditioniereinrichtung 18 sorgt zusätzlich für eine Entfeuchtung der Sitzkontaktfläche 31 des Sitzteils 24. Erst wenn der Sitzteil 24 komplett durchgeheizt ist, wird das elektrische Heizelement 26 abgeschaltet und die Temperierung der Sitzkontaktfläche 31 alleine durch die Luftkonditioniereinrichtung 18 mittels der Regelung der Gebläse 50 und 54 sowie des Peltierelements 42 durchgeführt.

Da der Sitzteil 24 eine sehr große Wärmekapazität auf niedrigem Temperaturniveau darstellt, würde ein zu frühes Abschalten des elektrischen Heizelements 26 zu einem erneuten Abkühlen der Sitzkontaktfläche 31 führen.

Wenn die Sitzkontaktfläche 31 des Sitzteils 24 jedoch bei Inbetriebnahme der Klimatisierungsvorrichtung durch die Sonne aufgeheizt ist, kann ihre Temperatur 60°C und mehr betragen. In diesem Fall wird durch Einblasen von kühler, trockener Luft in den Sitzteil durch die Luftkonditioniereinrichtung 18 die Sitzkontaktfläche 31 des Sitzteils 24 schnell abgekühlt.

Hierbei wird kurzzeitig so stark abgekühlt, daß die mittels des Sollwertgebers 12 eingestellte Soll-Temperatur Tₛₑₜ kurzzeitig deutlich unterschritten wird, z.B. auf ungefähr 28°C.

Hierdurch wird ein kurzzeitiger Kühleffekt erreicht, der eine schnelle Wärmeabfuhr vom Körper ermöglicht, wodurch ein ansonsten auftretender Schweißimpuls unterdrückt wird. Darüber hinaus hat der kurzzeitige Kühleffekt den Vorteil, daß der Sitzpassagier die Wirksamkeit der Klimatisierungsvorrichtung merkt. Da die Dauer der deutlichen Abkühlung sehr gering ist, wird ein gesundheitliches Risisko für den Sitzpassagier vermieden. Nach diesem "Cool-Down-Effekt" regelt der Mikroprozessor 20 die Luftkonditioniervorichtung 18 so, daß die Sitztemperatur, d.h. die durch den Temperaturfühler gemessene Ist-Temperatur, der am Regler eingestellten Soll-Temperatur entspricht.

Während des Betriebes kann es sinnvoll sein, von Zeit zu Zeit einen solchen kurzzeitigen "Cool-Down-Effekt" vorzusehen. Dies kann wechselweise zwischen Sitzfläche und Lehne geschehen, um so die Bemerkbarkeit durch den Sitzpassagier zu verbessern. Während der gesamten Betriebszeit führt die Luftkonditioniereinrichtung 18 die im Mikroklima zwischen Sitzkontaktfläche und Sitzpassagier entstehende Feuchte ab.

Bei gemäßigten Umgebungsbedingungen, d.h. wenn die von dem Temperaturfühler 28 bei Aktivierung der Klimatisierungsvorrichtung gemessene Ist-Temperatur innerhalb des durch den Sollwertgeber 12 vorgegebenen Temperaturbereichs liegt, wird die Luftkonditioniereinrichtung 18 so aktiviert, daß sie nur die Feuchte im Mikroklima abführt und die Sitztemperatur im Bereich der vorgegebenen Soll-Temperatur Tₛₑₜ regelt.

Die Klimatisierung der Lehne 22 des Klimasitzes kann auf die gleiche Weise erfolgen.

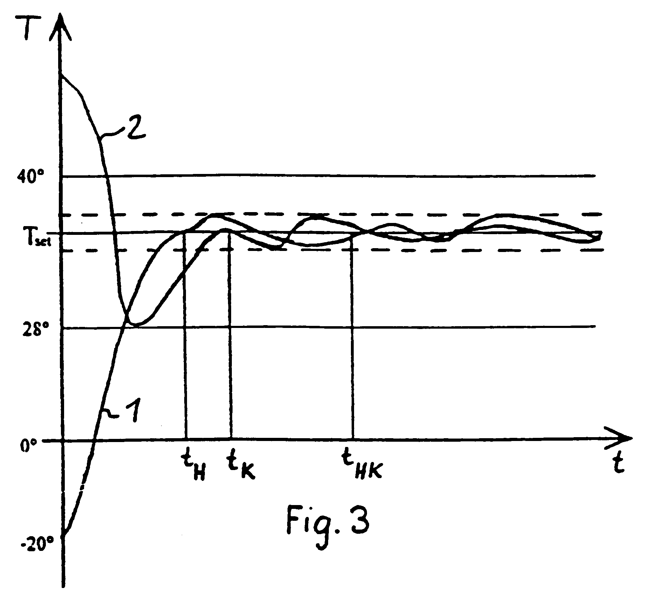

Die Regelkurven bei sehr kaltem und sehr warmem Klimasitz sind in Fig. 3 gezeigt. Bei dem in Fig. 3 gezeigten Diagramm ist die Zeit t entlang der Abszisse und die Temperatur T des Klimasitzes im Bereich der Sitzkontaktfläche 31 aufgetragen. T_{Set} ist die durch den Sollwertgeber 12 vorgebbare Soll-Temperatur. Die Soll-Temperatur kann zwischen ca. 32°C und 41°C eingestellt werden. Dieser Temperaturbereich ist für den menschlichen Körper medizinisch unbedenklich.

Kurve 1 in Fig. 3 zeigt die Erwärmung des Sitzes bei einer Anfangstemperatur von -20°C. Bis zum Zeitpunkt t_{H}, zu dem der Sitz auf die Soll-Temperatur aufgeheizt ist, ist nur das elektrische Flächenheizelement wirksam und wird mit voller Leistung betrieben. Anschließend erfolgt bis zum Zeitpunkt t_{HK} die Temperierung des Sitzes im Bereich der Soll-Temperatur Tₛₑₜ mit Hilfe des elektrischen Heizelementes und der Luftkonditioniereinrichtung. Ab dem Zeitpunkt t_{HK} ist nur noch die Luftkonditioniereinrichtung zur Entfeuchtung und Temperierung des Sitzes wirksam.

Die Kurve 2 zeigt die Temperierung des Sitzes bei einer sehr hohen Ausgangstemperatur von ca. 60°C. Mittels der Luftkonditioniereinrichtung 18 wird die Temperatur des Sitzes schnell auf eine Temperatur von ca. 28°C gesenkt, um den oben erwähnten "Cool-Down-Effekt" zu erhalten. Anschließend wird der Sitz nur mittels der Luftkonditioniereinrichtung 18 bis zum Zeitpunkt t_{K} auf die Soll-Temperatur Tₛₑₜ gebracht. Nach Erreichen der Soll-Temperatur Tₛₑₜ wird die Temperatur und die Entfeuchtung des Sitzes mittels der Luftkonditioniereinrichtung 18 so geregelt, daß sie im Bereich der Soll-Temperatur Tₛₑₜ verbleibt.

## Patentansprüche

1. Klimasitz, mit
- wenigstens einer Sitzkontaktfläche (31), deren Außenseite einem Teil eines Sitzpassagiers zugewandt ist,
- einer Luftkonditioniereinrichtung (18), die dem Bereich der Innenseite der Sitzkontaktfläche (31) Luft zuführt, deren Wasserdampfpartialdruck geringer ist als im Mikroklima zwischen Sitzkontaktfläche (31) und Sitzpassagier,
- einem im Bereich der Innenseite der Sitzkontaktfläche (31) angeordneten elektrischen Heizelement (24) zur Erwärmung der Sitzkontaktfläche (31),
- einer Temperaturfühleinrichtung (28) zur Erfassung der Temperatur im Bereich der Sitzkontaktfläche (31), und
- einer Regeleinrichtung (20), die sowohl mit der Luftkonditioniereinrichtung (18) als auch dem elektrischen Heizelement (24) in Verbindung steht und diese entsprechend einem vorgegebenen Temperatursollwert in Abhängigkeit der von der Temperaturfühleinrichtung (28) gemessenen Temperatur regelt, dadurch gekennzeichnet, daß
- die Luftkonditioniereinrichtung (18) ein Peltierelement (42) mit einem ersten Wärmetauscher (44) an seiner Kühlseite und einem zweiten Wärmetauscher (46) an seiner Heizseite aufweist, wobei sich der erste (44) und der zweite Wärmetauscher (46) in einen Luftkanal (40) erstrecken, der in Strömungsrichtung nach dem zweiten Wärmetauscher (46) mit einem Luftzuführungssystem (41, 38, 36) in Verbindung steht, das die den zweiten Wärmetauscher (46) durchströmende Luft dem Bereich der Innenseite der Sitzkontaktfläche (31) zuführt.

2. Klimasitz nach Anspruch 1, dadurch gekennzeichnet, daß die Temperatur der von der Luftkonditioniereinrichtung (18) zugeführten Luft mittels der Regeleinrichtung (20) regelbar ist.

3. Klimasitz nach Anspruch 1, dadurch gekennzeichnet, daß sowohl die Temperatur als auch die Luftfeuchtigkeit der von der Luftkonditioniereinrichtung (18) zugeführten Luft mittels der Regeleinrichtung (20) regelbar ist.

4. Klimasitz nach Anspruch 1 bis 3, dadurch gekennzeichnet, daß die Regeleinrichtung (20) von einem Mikroprozessor gebildet wird, in dem Kennlinienfelder zur Regelung der Luftkonditioniereinrichtung (18) und des elektrischen Heizelements (24) in Abhängigkeit der gemessenen Temperatur gespeichert sind.

5. Klimasitz nach Anspruch 4, dadurch gekennzeichnet, daß in den Kennlinienfeldern Materialparameter für den Bereich zwischen Sitzkontaktfläche (31) und Luftkonditioniereinrichtung (18) berücksichtigt sind.

6. Klimasitz nach Anspruch 1, dadurch gekennzeichnet, daß sich der zweite Wärmetauscher (46) in einen Kühlkanal (52) erstreckt, der von Kühlluft durchströmt werden kann.

7. Klimasitz nach Anspruch 1, dadurch gekennzeichnet, daß im Luftkanal (40) und im Kühlkanal (52) jeweils ein Gebläse (50, 54) angeordnet ist, dessen Drehzahl von der Regeleinrichtung (20) regelbar ist.

8. Klimasitz nach Anspruch 1, dadurch gekennzeichnet, daß in dem Luftkanal (40) nach dem ersten Wärmetauscher (44) ein Docht (48) angeordnet ist, der sich zur Heizseite des Peltierelements (42) erstreckt.

9. Verfahren zur Regelung der Temperatur des Klimasitzes nach Anspruch 1, bei dem bei einer hohen Anfangstemperatur des Bereichs der Sitzkontaktfläche
- die Luftkonditioniereinrichtung so betrieben wird, daß die von ihr dem Bereich der Sitzkontaktfläche zugeführte konditionierte Luft die Temperatur der Sitzkontaktfläche schnell und für kurze Zeit auf eine Temperatur abkühlt, die deutlich unterhalb einer vorgegeben Soll-Temperatur liegt, und
- anschließend die Luftkonditioniereinrichtung so betrieben wird, daß durch die von ihr dem Bereich der Sitzkontaktfläche zugeführte konditionierte Luft die Soll-Temperatur erreicht und im wesentlichen aufrechterhalten wird.

10. Verfahren nach Anspruch 9, dadurch gekennzeichnet, daß die Luft wiederholt für kurze Zeit auf eine Temperatur abgekühlt wird, die deutlich unterhalb der vorgegeben Soll-Temperatur liegt.

11. Verfahren nach Anspruch 10, dadurch gekennzeichnet, daß wechselweise die Sitzkontaktfläche der Lehne und der Sitzfläche abgekühlt werden.

12. Verfahren zur Regelung der Temperatur des Klimasitzes nach Anspruch 1, bei dem bei einer niedrigen Anfangstemperatur des Bereichs der Sitzkontaktfläche
- das elektrische Heizelement mit voller Leistung betrieben wird, bis eine Soll-Temperatur erreicht ist,
- nach Erreichen der Soll-Temperatur zusätzlich die Luftkonditioniereinrichtung betrieben und die Leistung des elektrischen Heizelements zurückgenommen wird, wobei die Soll-Temperatur im wesentlichen aufrechterhalten wird,
- nach vollkommener Durchheizung der Sitzkontaktfläche und der sie umgebenden Bereiche das elektrische Heizelement abgeschaltet und die Luftkonditioniereinrichtung so betrieben wird, daß durch die von ihr dem Bereich der Sitzkontaktfläche zugeführte konditionierte Luft die Soll-Temperatur im wesentlichen aufrechterhalten wird.

## Claims

1. A temperature-controlled seat with
- at least one seat-contact surface (31), the outside of which faces one part of a seated passenger,
- an air-conditioning device (18) which supplies air to the region of the inside of the seat-contact surface (31), the water-vapour partial pressure of which is lower than in the microclimate between the seat-contact surface (31) and the seated passenger,
- an electrical heating element (24) for heating the seat-contact surface (31) and disposed in the vicinity of the inside of the seat-contact surface (31),
- a temperature-sensing device (28) for sensing the temperature in the vicinity of the seat-contact surface (31), and
- a control device (20) which is connected to both the air-conditioning device (18) and the electrical heating element (24) and which controls them in accordance with a preset desired temperature value in response to the temperature measured by the temperature-sensing device (28), characterised in that
- the air-conditioning device (18) has a Peltier element (42) with a first heat exchanger (44) on its cooling side and with a second heat exchanger (46) on its heating side, wherein the first heat exchanger (44) and the second heat exchanger (46) extend in an air duct (40) which in the flow direction downstream of the second heat exchanger (46) is in communication with an air-supply system (41,38,36) which feeds the air flowing through the second heat exchanger (46) to the region of the inside of the seat-contact surface (31).

2. A temperature-controlled seat according to Claim 1, characterised in that the temperature of the air supplied by the air-conditioning device (18) can be controlled by means of the control device (20).

3. A temperature-controlled seat according to Claim 1, characterised in that both the temperature and the air humidity of the air supplied by the air-conditioning device (18) can be controlled by means of the control device (20).

4. A temperature-controlled seat according to Claims 1 to 3, characterised in that the control device (20) comprises a microprocessor, in which are stored families of characteristics for controlling the air-conditioning device (18) and the electrical heating element (24) in response to the measured temperature.

5. A temperature-controlled seat according to Claim 4, characterised in that material parameters for the region between the seat-contact surface (31) and the air-conditioning device (18) are taken into account in the families of characteristics.

6. A temperature-controlled seat according to Claim 1, characterised in that the second heat exchanger (46) extends in a cooling duct (52) through which cooling air can flow.

7. A temperature-controlled seat according to Claim 1, characterised in that in the air duct (40) and in the cooling duct (52) there is provided a respective blower (50,54), the speed of rotation of which can be controlled by the control device (20).

8. A temperature-controlled seat according to Claim 1, characterised in that a wick (48), which extends towards the heating side of the Peltier element (42), is provided in the air duct (4) downstream of the first heat exchanger (44).

9. A method of controlling the temperature of the seat according to Claim 1, in which at a high starting temperature in the vicinity of the seat-contact surface
- the air-conditioning device is operated in such a way that the conditioned air which it supplies to the region of the seat-contact surface cools the temperature of the seat-contact surface rapidly and for a short time to a temperature which is clearly below a preset desired temperature, and
- subsequently, the air-conditioning device is operated in such a way that the desired temperature is attained and substantially maintained by the conditioned air supplied thereby to the region of the seat-contact surface.

10. A method according to Claim 9, characterised in that the air is repeatedly cooled for a short time to a temperature which is clearly below a preset desired temperature.

11. A method according to Claim 10, characterised in that alternately the seat-contact surface of the backrest and the seat surface are cooled.

12. A method of controlling the temperature of the temperature-controlled seat according to Claim 1, in which at a low starting temperature in the vicinity of the seat-contact surface
- the electrical heating element is operated at full power until a desired temperature is attained,
- after reaching the desired temperature additionally the air-conditioning device is operated and the power of the electrical heating element is reduced, whereupon the desired temperature is substantially maintained,
- after the seat-contact surface and the surrounding areas have been completely heated through the electrical heating element is switched off and the air-conditioning device is operated in such a way that the desired temperature is substantially maintained by the conditioned air supplied thereby to the region of the seat-contact surface.

## Revendications

1. Siège climatisé comportant
- au moins une surface de contact du siège (31) dont le côté externe est orienté vers une partie d'un passager du siège,
- un dispositif de conditionnement de l'air (18), qui amène de l'air à la zone du côté interne de la surface de contact du siège (31), dont la pression partielle de vapeur d'eau est plus faible que dans le microclimat situé entre la surface de contact du siège (31) et le passager du siège,
- un élément de chauffage électrique (24) disposé dans la zone du côté interne de la surface de contact du siège (31) visant à chauffer la surface de contact du siège (31),
- un dispositif palpeur de température (28) pour détecter la température dans la zone de la surface de contact du siège (31), et
- un dispositif de réglage (20) qui est en liaison non seulement avec le dispositif de conditionnement de l'air (18) mais aussi avec l'élément de chauffage électrique (24) et règle ceux-ci, en fonction de la température mesurée par le dispositif palpeur de température (28), suivant une valeur prescrite de température définie à l'avance, caractérisé en ce que
- le dispositif de conditionnement de l'air (18) présente un élément Peltier (42) avec un premier échangeur thermique (44) sur son côté de refroidissement et un deuxième échangeur thermique (46) sur son côté de chauffage, le premier (44) et le deuxième échangeur thermique (46) s'étendant dans un canal d'air (40), qui est en liaison, dans le sens d'écoulement après le deuxième échangeur thermique (46), avec un système d'adduction d'air (41, 38, 36) qui amène l'air traversant le deuxième échangeur thermique (46) à la zone du côté interne de la surface de contact du siège (31).

2. Siège climatisé selon la revendication 1, caractérisé en ce que la température de l'air amené par le dispositif de conditionnement de l'air (18) peut être réglée au moyen du dispositif de réglage (20).

3. Siège climatisé selon la revendication 1, caractérisé en ce que non seulement la température mais aussi l'humidité de l'air amené par le dispositif de conditionnement de l'air (18) peut être réglée au moyen du dispositif de réglage (20).

4. Siège climatisé selon les revendications 1 à 3, caractérisé en ce que le dispositif de réglage (20) est formé par un microprocesseur, dans lequel sont enregistrés des réseaux de caractéristiques pour le réglage du dispositif de conditionnement de l'air (18) et de l'élément de chauffage électrique (24) en fonction de la température mesurée.

5. Siège climatisé selon la revendication 4, caractérisé en ce que dans les réseaux de caractéristiques sont pris en considération des paramètres de matériaux pour la zone située entre la surface de contact du siège (31) et le dispositif de conditionnement de l'air (18).

6. Siège climatisé selon la revendication 1, caractérisé en ce que le deuxième échangeur thermique (46) s'étend dans un canal de refroidissement (52) pouvant être traversé par de l'air de refroidissement.

7. Siège climatisé selon la revendication 1, caractérisé en ce que dans le canal d'air (40) et dans le canal de refroidissement (52) est disposé à chaque fois une soufflante (50, 54), dont la vitesse de rotation peut être réglée par le dispositif de réglage (20).

8. Siège climatisé selon la revendication 1, caractérisé en ce que dans le canal d'air (40) après le premier échangeur thermique (44) est disposée une mèche (48) qui s'étend vers le côté de chauffage de l'élément Peltier (42).

9. Procédé de réglage de la température du siège climatisé selon la revendication 1, dans lequel avec une température initiale élevée de la zone de la surface de contact du siège
- le dispositif de conditionnement de l'air est actionné de telle manière que l'air conditionné, amené par celui-ci à la zone de la surface de contact du siège, refroidit rapidement et pour peu de temps la température de la surface de contact du siège à une température qui se situe nettement au-dessous d'une température prescrite définie à l'avance, et
- ensuite le dispositif de conditionnement de l'air est actionné de telle sorte que la température prescrite est atteinte et sensiblement maintenue grâce à l'air conditionné amené par ledit dispositif à la zone de la surface de contact du siège.

10. Procédé selon la revendication 9, caractérisé en ce que l'air est refroidi de façon répétée et pour peu de temps à une température, qui se situe nettement au-dessous de la température prescrite définie à l'avance.

11. Procédé selon la revendication 10, caractérisé en ce que la surface de contact du dossier et celle de la surface de siège sont refroidies alternativement.

12. Procédé de réglage de la température du siège climatisé selon la revendication 1, dans lequel à une température initiale basse de la zone de la surface de contact du siège
- l'élément de chauffage électrique est actionné à plein régime, jusqu'à ce qu'une température prescrite soit atteinte,
- après obtention de la température prescrite, le dispositif de conditionnement de l'air est en outre actionné et le régime de l'élément de chauffage électrique est réduit, la température prescrite étant ainsi sensiblement maintenue,
- après chauffage intégral parfait de la surface de contact du siège et des zones l'entourant, l'élément de chauffage électrique est arrêté et le dispositif de conditionnement de l'air est actionné de sorte que la température prescrite est essentiellement maintenue grâce à l'air conditionné amené par ledit dispositif dans la zone de la surface de contact du siège.
